# EUROPÄISCHE PATENTSCHRIFT

(11) **EP 3 326 850 B1**
(45) Veröffentlichungstag und Bekanntmachung des Hinweises auf die Patenterteilung: **28.12.2022**
(21) Anmeldenummer: 17200287.5
(22) Anmeldetag: 07.11.2017
(51) Int. Cl.: B60H 1/00, B61D 27/00

(54) **VERFAHREN ZUR KLIMATISIERUNG EINES FAHRGASTRAUMES SOWIE KLIMAANLAGE FÜR EINEN FAHRGASTRAUM**
METHOD FOR AIR CONDITIONING A PASSENGER COMPARTMENT AND AIR CONDITIONING INSTALLATION FOR A PASSENGER COMPARTMENT
PROCÉDÉ DE CONDITIONNEMENT D'AIR D'UN HABITACLE AINSI QU'INSTALLATION DE CONDITIONNEMENT D'AIR POUR UN HABITACLE

(30) Priorität: 29.11.2016 DE 102016014216
(43) Veröffentlichungstag der Anmeldung: 30.05.2018
(73) Patentinhaber: Liebherr-Transportation Systems GmbH & Co. KG, 2100 Korneuburg (AT)
(72) Erfinder: Martin, Dr. Robert, 1230 Wien (AT); Aigner, Reinhard, 2103 Langenzersdorf (AT)
(74) Vertreter: Laufhütte, Dieter

(56) Entgegenhaltungen:
- EP-A1- 2 868 545
- DE-C1- 19 847 504
- JP-A- 2001 150 919

## Beschreibung

Die Erfindung betrifft ein Verfahren zur Klimatisierung eines Fahrgastraumes eines Transportmittels, insbesondere eines Personenzuges, sowie eine Klimaanlage zur Ausführung eines derartigen Verfahrens.

Bekannte Klimaanlagen umfassen eine Klimasteuerung zur Regelung der Raumtemperatur innerhalb des zu klimatisierenden Raumes. Dabei wird die gemessene Raumtemperatur als Ist-Wert zurückgeführt und die Klimaanlage entsprechend zur Erreichung der Soll-Temperatur nachgeregelt. Verwendung finden Klimaanlagen häufig in Transportmitteln, um den mitfahrenden Passagieren einen hohen Komfort während der Fahrtzeit bieten zu können. Ein konkretes Beispiel ist die Klimatisierung des Zugabteils eines Schienenfahrzeuges. Insbesondere bei Transportmitteln mit häufigen Passagierwechseln während zahlreicher Zwischenstopps zwischen den Endpunkten der Fahrtstrecke kommt es zu einer häufigen Änderung der Umgebungsbedingungen im Fahrgastraum, da die Anzahl der mitfahrenden Passagiere Einfluss auf die Raumtemperatur hat.

Eine herkömmliche Klimaanlage regelt die Leistung zum Heizen/Kühlen ausschließlich über die gemessene IST-Temperatur innerhalb des Raums. Ein Passagierwechsel beeinflusst diese Messgröße indirekt aufgrund der durch die geänderte Passagierabwärme hervorgerufenen Abweichung der Innentemperatur. Es kommt folglich zu einer zeitverzögerten Anpassung der Anlagenleistung. Ferner kommt es dadurch zu größeren Temperaturabweichungen im Innenraum und auch zu einem erhöhten Energieverbrauch bis die Klimaanlage den Lastwechsel vollständig nachgeregelt hat. Eine solche, zumindest kleine und/oder temporäre Regelabweichung ist für geschlossene Regelkreise charakteristisch. Unter bestimmten Bedingungen kühlt die Klimaanlage bei reduzierter Passagieranzahl zumindest anfänglich zu stark. Zudem kann aufgrund der trägen Reaktion der Regelung auf einen erhöhten Kühlbedarf eine stärkere Leistung der Klimaanlage notwendig sein.

Das Dokument EP 2 868 545 A1 zeigt die Berücksichtigung der Insassenanzahl bei der Regelung der Innenraumtemperatur eines Schienenfahrzeugs.

Die Aufgabe der vorliegenden Erfindung besteht darin, ein Verfahren zur Klimatisierung eines Fahrgastraumes bzw. eine derartige Klimaanlage dahingehend weiter zu bilden, sodass diese schneller auf die dynamischen Bedingungen innerhalb des Fahrgastraumes reagieren kann.

Gelöst wird diese Aufgabe durch ein Verfahren gemäß den Merkmalen des Anspruchs 1. Vorteilhafte Ausgestaltungen des Verfahrens sind Gegenstand der sich an den Hauptanspruch anschließenden abhängigen Ansprüche.

Erfindungsgemäß wird ein Verfahren zur Klimatisierung eines Fahrgastraumes eines Transportmittels vorgeschlagen. Das Transportmittel kann beispielsweise ein Schienenfahrzeug sein. Die Erfindung ist jedoch nicht auf derartige Transportmittel beschränkt, sondern lässt sich überall dort vorteilhaft einsetzen, wo es zu Änderungen der Passagieranzahl während des Klimaanlagenbetriebes kommen kann.

Der Fahrgastraum bei einem Schienenfahrzeug ist beispielsweise ein Personenabteil eines Reisezugs oder der gesamte Personenaufenthaltsbereiches eines Nahverkehrszuges. Grundlage ist eine Klimaanlage und eine Klimasteuerung zur Steuerung und Regelung der Raumtemperatur des Fahrgastraumes, beispielsweise mit der gemessenen oder berechneten Raumtemperatur als Ist-Größe und einer voreinstellbaren Soll-Temperatur, auf die die tatsächliche Raumtemperatur als Regelgröße geregelt werden soll. Erfindungsgemäß wird nunmehr zur Steuerung und/oder Regelung der Raumtemperatur des Fahrgastraumes die erfasste Anzahl und/oder eine erfasste Anzahländerung der sich innerhalb des Fahrgastraumes aufhaltenden Insassen berücksichtigt, d.h. diese Größe fließt unmittelbar in die Steuerung/Regelung ein. Damit kann die Klimasteuerung mehr oder weniger unverzögert auf Änderungen der Passagieranzahl innerhalb des Fahrgastraumes reagieren und die Klimaanlage gemäß der geänderten Wärmelast nachregeln bzw. ansteuern. Die Reaktion der Klimaanlagensteuerung auf eine Wärmelaständerung erfolgt dadurch nicht erst aufgrund einer bereits eingetretenen Innentemperaturabweichung zum Sollwert, sondern bereits im Vorwärtszweig der Regelschleife durch Erfassen der tatsächlichen Umstände innerhalb des Fahrgastraumes (Belegung) in Echtzeit.

Die Erfindung spricht von einer Steuerung/Regelung der Temperatur. Es versteht sich von selbst, dass die Information bezüglich der Anzahl der sich im Fahrgastraum aufhaltenden Passagiere auch bei einer Steuerung/Regelung weiterer klimatischer Größen berücksichtigt werden kann, beispielsweise bei einer Steuerung/Regelung der Klimaanlage auf eine gewünschte Luftfeuchte.

Erfindungsgemäß wird die Insassenanzahl und/oder die Anderung dei Insassenanzahl per Störgrößenaufschaltung in die Regelschleife der Klimasteuerung eingebunden.

Dadurch wird die Leistung der Klimaanlage im Kühlen oder Heizen unmittelbar auf den geänderten Bedarf nachjustiert. In diesem Fall wird die Anzahl der Passagiere innerhalb des Fahrgastraumes bzw. die Änderung der Anzahl der Passagiere innerhalb des Fahrgastraumes vorzugsweise messtechnisch erfasst und als Störgröße an den Regelkreis zur Klimatisierung, d.h. zur Regelung der Raumtemperatur und der Frischluftmenge, zurückgegeben.

Denkbar ist es ebenfalls, die Anzahl bzw. Anzahländerungen nicht unmittelbar zu erfassen, sondern diese durch zusätzliche Mittel zu schätzen, beispielsweise mittels eines Störgrößenbeobachters.

Die im Endeffekt mögliche rasche Reaktion der Klimaanlage auf Passagierwechsel führt zu einer deutlich geringeren Abweichung des Sollwertes der Innentemperatur und erhöht damit den Passagierkomfort der mitfahrenden Fahrgäste. Des Weiteren wird durch die rasche Reaktion der Klimaanlage auf Passagierwechsel nicht über Gebühr gekühlt oder geheizt, wodurch Energie- und Betriebskosten eingespart werden können.

Im Fall einer mittelbaren bzw. unmittelbaren Messung bzw. Zählung der Anzahl der sich im Fahrgastraum aufhaltenden Passagiere wird vorzugsweise ein Zählsystem eingesetzt, das die Anzahl der den Fahrgastraum verlassenden Personen und/oder die Anzahl der den Fahrgastraum betretenden Personen während der Betriebsdauer des Transportmittels zählt. Diese Information kann beispielsweise der Klimaanlage bzw. der Klimasteuerung durch eine geeignete Schnittstelle zur Verfügung gestellt werden. Alternativ besteht ebenfalls die Möglichkeit, dass das Zählsystem Bestandteil der Klimaanlage selbst ist.

Die Klimasteuerung wertet die bereitgestellten Informationen des Zählsystems aus und kann darauf basierend die konkrete Anzahl der im Fahrgastraum befindlichen Personen ermitteln bzw. eine Änderung der Passagieranzahl bestimmen. Auf Grundlage dieser ermittelten Anzahl bzw. Anzahländerung kann eine Anpassung der Raumtemperaturregelung erfolgen.

Denkbar ist beispielsweise ein Zählsystem, das mittels ein oder mehrerer an Zugangsmöglichkeiten des Fahrgastraumes installierten Sensoren, vorzugsweise Infrarotsensoren, die Anzahl der die Zugangsmöglichkeit passierenden Personen erfasst. Anhand dieser Information lässt sich letztendlich die im Raum befindliche Passagieranzahl bestimmen.

Eine weitere optionale Ergänzung sieht vor, dass die Anzahl der sich innerhalb des Fahrgastraumes aufhaltenden Personen in einem Speicher persistent gespeichert wird, vorzugsweise in einem Speicher der Klimasteuerung. Dadurch wird sichergestellt, dass auch nach erfolgter Abschaltung und Neustart der Klimasteuerung die letzte Anzahl der im Fahrgastraum befindlichen Passagiere abgerufen werden kann. Denkbar ist es auch, dass dieser Wert stets als Initialwert für die Berechnung der Personenanzahl nach einem Neustart der Klimaanlage dient.

In der Praxis kann es notwendig sein, diesen gespeicherten Wert bzw. Initialwert nach bestimmter Betriebsdauer auf Null zu setzen. Vorzugsweise erfolgt eine Nullsetzung nach heuristischen Regeln. Beispielsweise kann eine Nullsetzung bei der Erstinbetriebnahme des Transportmittels für jeden neuen Tag erfolgen. Denkbar ist es auch, eine Nullsetzung zu einer bestimmten Uhrzeit auszuführen, beispielsweise außerhalb der üblichen Betriebszeiten des Transportmittels. Vorstellbar ist auch eine Nullsetzung zu einer vordefinierten Uhrzeit, allerdings nur dann, wenn sich das Transportmittel zuvor über eine bestimmte Zeitdauer im Stillstand befunden hat.

Neben dem erfindungsgemäßen Verfahren betrifft die vorliegende Erfindung ebenfalls eine Klimaanlage zur Klimatisierung eines Fahrgastraumes, insbesondere eines Personenzuges, mit einer Klimasteuerung für die Ausführung des Verfahrens gemäß der vorliegenden Erfindung.

Demnach weist die Klimaanlage dieselben Vorteile und Eigenschaften auf, die bereits zuvor im Zusammenhang mit dem erfindungsgemäßen Verfahren aufgezeigt wurden. Auf eine wiederholende Beschreibung wird aus diesem Grund verzichtet.

Die erfindungsgemäße Klimaanlage umfasst optional entweder wenigstens ein Insassenzählsystem und/oder weist vorzugsweise wenigstens eine geeignete Kommunikationsschnittstelle auf, um ein bereits existierendes externes Insassenzählsystem des Transportmittels anzubinden, um die extern erfassten Passagierzählwerte der Klimasteuerung zur Verfügung stellen zu können. Eine geeignete Schnittstelle ist beispielsweise eine Ethernet-Schnittstelle. Selbstverständlich ist es vorstellbar, die Schnittstelle auf Grundlage beliebiger geeigneter Übertragungsprotokolle für den Austausch von Informationen zu realisieren.

Zuletzt betrifft die Erfindung ein Transportmittel, insbesondere ein Schienenfahrzeug, mit einer Klimaanlage gemäß der vorliegenden Erfindung.

Weitere Vorteile und Eigenschaften der Erfindung sollen im Folgenden anhand eines beschriebenen Ausführungsbeispiels näher erläutert werden.

Als Ausführungsbeispiel wird eine Klimaanlage für ein Zugabteil eines Personenzuges beschrieben. Die Klimaanlage regelt die im Zugabteil herrschende Innentemperatur gemäß einer konfigurierbaren Solltemperatur. Dabei wird die tatsächliche Ist-Temperatur sensorisch erfasst und die Regelgröße in Abhängigkeit der Soll-Größe durch die Klimasteuerung eingestellt. Die aktuelle Passagierzahl der sich im Zugabteil aufhaltenden Personen wird der Regelung als Störgröße zugeführt. Folglich wird die dadurch bedingte Wärmelaständerung innerhalb des Fahrgastraumes im Vorwärtszweig der Regelschleife berücksichtigt und die Regelung kann in Echtzeit auf diese dynamischen Änderungen reagieren.

Durch diese sogenannte Störgrößenaufschaltung wird die Leistung der Klimaanlage im Kühl- oder Heizbetrieb unmittelbar auf den geänderten Bedarf nachjustiert. Die so ermöglichte rasche Reaktion der Klimaanlage auf Passagierwechsel führt zu geringeren Abweichungen der Ist-Temperatur vom Sollwert der Innentemperatur und damit letztendlich zu einer deutlichen Erhöhung des Passagierkomforts. Des Weiteren wird durch die rasche Reaktion auf Passagierwechsel nicht Übergebühr gekühlt oder geheizt, was eine Einsparung von Energie- und Betriebskosten mit sich bringt.

Ein kommerziell erhältliches Zählsystem erfasst mithilfe von Infrarotsensoren über alle Zugangstüren des Fahrgastraumes die Personen, die das Abteil und/oder das Schienenfahrzeug durch die betreffende Tür betreten oder verlassen. Über eine Ethernet-Verbindung werden diese Rohdaten von der Zentrale des Zählsystems zur Klimasteuerung übertragen. Dort berechnet die Software daraus die Anzahl der im Raum verbleibenden Personen zur weiteren Verwendung. Zusätzlich wird diese Anzahl persistent gespeichert. Bei jedem Einschalten dient dieser gespeicherte Zählerstand als Ausgangsbasis für die weitere Zählung.

Um Fehlerakkumulierungen zu korrigieren, wird der gespeicherte Zählerstand nach heuristischen Regeln wieder auf Null gesetzt, beispielsweise beim ersten Einschalten an jedem Tag, und zum Beispiel um 03:00 Uhr in der Nacht, falls das Fahrzeug zu dieser Zeit aufgerüstet ist, sich jedoch seit mehr als einer Stunde im Stillstand befindet.

## Patentansprüche

1. Verfahren zur Klimatisierung eines Fahrgastraumes eines Transportmittels, insbesondere eines Schienenfahrzeuges, mit einer Klimaanlage und einer Klimasteuerung zur Steuerung und/oder Regelung der Raumtemperatur des Fahrgastraumes, wobei
die Steuerung und/oder Regelung der Raumtemperatur in Abhängigkeit der Anzahl und/oder einer Anzahländerung der sich innerhalb des Fahrgastraumes aufhaltenden Insassen erfolgt,
**dadurch gekennzeichnet, dass**
die Insassenanzahl und/oder die Änderung der Insassenanzahl per Störgrößenaufschaltung in den Regelkreis zur Raumtemperaturregelung eingebunden wird, und
die Insassenanzahl und/oder die Änderung der Insassenanzahl per Störgrößenaufschaltung in den Regelkreis zur Frischluftmengenregelung eingebunden wird.

2. Verfahren nach einem der vorhergehenden Ansprüche, **dadurch gekennzeichnet, dass** mittels eines Zählsystems die Anzahl der den Fahrgastraum verlassenden Personen und/oder die Anzahl der den Fahrgastraum betretenden Personen gezählt wird.

3. Verfahren nach einem der vorhergehenden Ansprüche, **dadurch gekennzeichnet, dass** mittels einer Sensorik zur Ermittlung der Fahrzeuggewichtes die Anzahl der den Fahrgastraum verlassenden Personen und/oder die Anzahl der den Fahrgastraum betretenden Personen ermittelt wird.

4. Verfahren nach Anspruch 2 oder 3, **dadurch gekennzeichnet, dass** die Klimasteuerung anhand der durch das Zählsystem oder durch die Sensorik zur Ermittlung der Fahrzeuggewichtesbereitgestellten Informationen die Anzahl der sich innerhalb des Fahrgastraumes aufhaltenden Personen bestimmt und/oder eine Änderung der sich innerhalb des Fahrgastraumes aufhaltenden Personen ermittelt.

5. Verfahren nach einem der vorhergehenden Ansprüche 2 bis 4, **dadurch gekennzeichnet, dass** die Zählung bzw. Erfassung der Änderung in Echtzeit erfolgt und die Klimasteuerung basierend auf dieser Information die Anzahl oder Änderung der Anzahl der sich im Fahrgastraum aufhaltenden Personen in Echtzeit bestimmt.

6. Verfahren nach einem der vorhergehenden Ansprüche 2 bis 5, **dadurch gekennzeichnet, dass** das Zählsystem mittels ein oder mehrerer an Zugangsmöglichkeiten des Fahrgastraumes angeordneter Sensoren, insbesondere Infrarotsensoren, die Anzahl der die Zugangsmöglichkeit passierenden Personen erfasst.

7. Verfahren nach einem der Ansprüche 2 bis 6, **dadurch gekennzeichnet, dass** die Anzahl der sich innerhalb des Fahrgastraumes aufhaltenden Personen in einem Speicher persistent gespeichert wird.

8. Verfahren nach Anspruch 7, **dadurch gekennzeichnet, dass** die persistent gespeicherte Personenanzahl als Initialwert für die Berechnung der Personenanzahl nach einem Neustart der Klimaanlage dient.

9. Verfahren nach einem der Ansprüche 7 oder 8, **dadurch gekennzeichnet, dass** der gespeicherte Wert der Personenanzahl nach heuristischen Regeln auf null gesetzt wird.

10. Verfahren nach Anspruch 9, **dadurch gekennzeichnet, dass** eine Nullsetzung bei Inbetriebnahme des Transportmittels und/oder zu einer bestimmten Tageszeit erfolgt, falls das Transportmittel zu dieser Zeit aufgerüstet ist, sich jedoch seit einer bestimmten Mindestdauer im Stillstand befindet.

11. Klimaanlage zur Klimatisierung eines Fahrgastraumes, insbesondere eines Schienenfahrzeuges zur Personenbeförderung, mit einer Klimasteuerung für die Ausführung des Verfahrens nach einem der vorhergehenden Ansprüche.

12. Klimaanlage nach Anspruch 11, **dadurch gekennzeichnet, dass** die Klimaanlage wenigstens ein Insassenzählsystem umfasst und/oder wenigstens eine Schnittstelle, insbesondere eine Ethernet-Schnittstelle, zur Anbindung eines externen Insassenzählsystem aufweist.

13. Transportmittel, insbesondere Schienenfahrzeug, mit einer Klimaanlage gemäß einem der Ansprüche 11 oder 12.

## Claims

1. Method for air conditioning a passenger compartment of a means of transport, in particular of a railway vehicle, having an air conditioning device and an air conditioning control unit for controlling and/or regulating the ambient temperature of the passenger compartment, wherein
the control and/or regulation of the ambient temperature is carried out as a function of the number and/or a change in the number of occupants staying inside the vehicle compartment,
**characterised in that**
the number of occupants and/or the change in the number of occupants is integrated into the control loop for controlling the ambient temperature via disturbance feedforward control, and
the number of occupants and/or the change in the number of occupants is integrated into the control loop for controlling the amount of fresh air via disturbance feedforward control.

2. Method according to any one of the preceding claims, **characterised in that** the number of people leaving the passenger compartment and/or the number of people entering the passenger compartment is counted by means of a counting system.

3. Method according to any one of the preceding claims, **characterised in that** the number of people leaving the passenger compartment and/or the number of people entering the passenger compartment is determined by means of a sensor system for determining the weight of the vehicle.

4. Method according to claim 2 or 3, **characterised in that** the air conditioning control unit determines the number of people staying inside the passenger compartment and/or ascertains a change in the number of people inside the passenger compartment using the information provided by the counting system or by the sensor system for determining the vehicle weight.

5. Method according to any one of the preceding claims 2 to 4, **characterised in that** counting or ascertaining the change occurs in real time and, based on this information, the air conditioning control unit determines the number or change in number of people staying in the passenger compartment in real time.

6. Method according to any one of the preceding claims 2 to 5, **characterised in that**, by means of one or a plurality of sensors, in particular infrared sensors, arranged on access points of the passenger compartment, the counting system records the number of people passing through the access point.

7. Method according to any one of claims 2 to 6, **characterised in that** the number of people inside the passenger compartment is saved in a storage in a persistent manner.

8. Method according to claim 7, **characterised in that** the number of people stored in a persistent manner is used as an initial value for the calculation of the number of people after the air conditioning system has been restarted.

9. Method according to any one of claims 7 or 8, **characterised in that** the stored value of the number of people is set to zero according to heuristic rules.

10. Method according to claim 9, **characterised in that** setting to zero takes place when the means of transport is put into service and/or at a certain time of day if the means of transport is set up at this time but has been at a standstill for a certain minimum period of time.

11. Air conditioning system for air conditioning a passenger compartment, in particular of a railway vehicle for passenger transport, having an air conditioning control unit for performing the method according to any one of the preceding claims.

12. Air conditioning system according to claim 11, **characterised in that** the air conditioning system includes at least one occupant counting system and/or comprises at least one interface, in particular an ethernet interface, for connection to an external occupant counting system.

13. Means of transport, in particular a railway vehicle, having an air conditioning system according to any one of claims 11 or 12.

## Revendications

1. Procédé de climatisation d'un habitacle d'un moyen de transport, notamment d'un véhicule ferroviaire, avec une installation de climatisation et une commande de climatisation pour la commande et/ou la régulation de la température ambiante de l'habitacle,
la commande et/ou la régulation de la température ambiante s'effectuant en fonction du nombre et/ou d'une modification du nombre des occupants se trouvant à l'intérieur de l'habitacle,
**caractérisé en ce que**
le nombre d'occupants et/ou la modification du nombre d'occupants sont intégrés dans le circuit de régulation pour la régulation de la température ambiante par activation de la grandeur perturbatrice, et
le nombre d'occupants et/ou la modification du nombre d'occupants sont intégrés dans le circuit de régulation pour la régulation de la quantité d'air frais par activation de la grandeur perturbatrice.

2. Procédé selon l'une quelconque des revendications précédentes, **caractérisé en ce que** le nombre de personnes quittant l'habitacle et/ou le nombre de personnes entrant dans l'habitacle est dénombré au moyen d'un système de dénombrement.

3. Procédé selon l'une quelconque des revendications précédentes, **caractérisé en ce que** le nombre de personnes quittant l'habitacle et/ou le nombre de personnes entrant dans l'habitacle est déterminé au moyen d'un système de détection pour déterminer le poids du véhicule.

4. Procédé selon la revendication 2 ou 3, **caractérisé en ce que** la commande de climatisation détermine le nombre de personnes se trouvant à l'intérieur de l'habitacle et/ou détermine une modification des personnes se trouvant à l'intérieur de l'habitacle à l'aide des informations fournies par le système de dénombrement ou par le système de détection pour déterminer le poids du véhicule.

5. Procédé selon l'une quelconque des revendications 2 à 4 précédentes, **caractérisé en ce que** le dénombrement ou la détection de la modification s'effectue en temps réel et la commande de climatisation détermine en temps réel, sur la base de cette information, le nombre ou la modification du nombre de personnes se trouvant dans l'habitacle.

6. Procédé selon l'une quelconque des revendications 2 à 5 précédentes, **caractérisé en ce que** le système de dénombrement détecte le nombre de personnes passant par la possibilité d'accès au moyen d'un ou de plusieurs capteurs, notamment capteurs infrarouges, agencés au niveau de possibilités d'accès de l'habitacle.

7. Procédé selon l'une quelconque des revendications 2 à 6, **caractérisé en ce que** le nombre de personnes se trouvant à l'intérieur de l'habitacle est enregistré de manière persistante dans une mémoire.

8. Procédé selon la revendication 7, **caractérisé en ce que** le nombre de personnes enregistré de manière persistante sert de valeur initiale pour le calcul du nombre de personnes après un redémarrage de l'installation de climatisation.

9. Procédé selon l'une quelconque des revendications 7 ou 8, **caractérisé en ce que** la valeur enregistrée du nombre de personnes est mise à zéro selon des règles heuristiques.

10. Procédé selon la revendication 9, **caractérisé en ce qu'**une mise à zéro est effectuée lors de la mise en service du moyen de transport et/ou à un moment déterminé de la journée si le moyen de transport est équipé à ce moment, mais est à l'arrêt depuis une durée minimale déterminée.

11. Installation de climatisation pour la climatisation d'un habitacle, notamment d'un véhicule ferroviaire pour le transport de personnes, avec une commande de climatisation pour la réalisation du procédé selon l'une quelconque des revendications précédentes.

12. Installation de climatisation selon la revendication 11, **caractérisée en ce que** l'installation de climatisation comprend au moins un système de dénombrement des occupants et/ou présente au moins une interface, notamment une interface Ethernet, pour la connexion d'un système de dénombrement des occupants externe.

13. Moyen de transport, notamment véhicule ferroviaire, avec une installation de climatisation selon l'une quelconque des revendications 11 ou 12.
